# EUROPÄISCHE PATENTANMELDUNG

(11) **EP 1 455 277 A1**
(43) Veröffentlichungstag der Anmeldung: **08.09.2004**
(21) Anmeldenummer: 03023936.2
(22) Anmeldetag: 22.10.2003
(51) Int. Cl.: G06F 11/26

(54) **Vorrichtung zur Bereitstellung von Emulationsfunktionen**

(30) Priorität: 04.03.2003 DE 10309277
(71) Anmelder: ROBERT BOSCH GMBH, 70442 Stuttgart (DE)
(72) Erfinder: Aue, Axel, 70825 Korntal-Muenchingen (DE)

(57) **Zusammenfassung**

Die Erfindung betrifft eine Vorrichtung zur Bereitstellung von Emulationsfunktionen in einem Steuergerät. Mit einem Multichip-Carrier auf dem ein Flipchip-Prozessor angeordnet ist und mindestens ein weiteres Bauelement angeordnet werden kann. Der Multichip-Carrier ersetzt einen in einem Steuergerät vorhandenen Mikroprozessor, wobei die Bauelemente auf dem Multichip-Carrier, zumindestens teilweise die Leistungen und den Funktionsumfang des ersetzten Mikroprozessor sowie zusätzliche Funktionen zur Emulation bereitstellen.

## Beschreibung

### Stand der Technik

Die Erfindung geht aus von einer Vorrichtung zur Bereitstellung von Emulationsfunktionen in einem Steuergerät nach der Gattung des unabhängigen Anspruchs. Aus der DE 39 17979 C 2 ist bereits eine Emulationsvorrichtung für ein Steuergerät bekannt, bei dem ein EPROM aus einem Stecksockel eines Steuergerätes herausgezogen und dafür eine auf einer Platine angeordnete Daten-Manipulationseinrichtung eingesteckt wird. Das herausgezogene EPROM wird wiederum in einem Stecksockel auf der Platine der Daten-Manipulationseinrichtung eingesteckt. Da die Abmessungen der Daten-Manipulationseinrichtung größer sind, als die des zu tauschenden EPROMs, ist bereits im Vorfeld im Layout des Steuergerätes Platz für die Datenmanipulationseinrichtung vorzusehen.

### Vorteile der Erfindung

Die erfindungsgemäße Vorrichtung zur Bereitstellung von Emulationsfunktionen in einem Steuergerät mit den Merkmalen des unabhängigen Anspruches, hat demgegenüber den Vorteil, einen Multichip-Carrier vorzusehen, der in den Abmessungen dem zu tauschenden Mikroprozessor entspricht. Ferner können die bereits für den Mikroprozessor vorgesehenen Kontakt-Pads in vorteilhafter Weise auch für den Multichip-Carrier genutzt werden. Der Mikroprozessor kann somit durch die erfindungsgemäße Vorrichtung getauscht werden, ohne dass im Vorfeld Änderungen des Layouts des Steuergerätes notwendig wären. Dies hat ferner den Vorteil, dass Emulationsfunktionen in Steuergeräte zu implementieren sind, die typischerweise ohne die erfindungsgemäße Vorrichtung einer Emulationsapplikation nicht zugänglich sind. In vorteilhafter Weise ersetzt der auf dem Multichip-Carrier angeordnete Flip Chip-Prozessor zumindest teilweise den Leistungsund Funktionsumfang des ersetzten Mikroprozessor und stellt vorteilhaft zusätzliche Funktionen zur Emulation bereit. Als weiterer Vorteil ist anzusehen, dass der Flip-Chip-Prozessor in seinen Abmessungen kleiner ist als der ersetzte Mikroprozessor, so dass in vorteilhafter Weise auf den Multichip-Carrier mindestens ein weiteres Bauelement anordbar ist, wobei dieses mindestens eine Bauelement vorteilhaft weitere Funktionen bereitstel lt.

Durch die in den Unteransprüchen aufgeführten Maßnahmen sind vorteilhafte Weiterbildungen und Verbesserungen der im unabhängigen Anspruch angegebenen Vorrichtung zur Bereitstellung von Emulationsfunktionen in einem Steuergerät möglich.

Insbesondere können die folgenden Bauelemente einzeln oder in Kombination zur Bereitstellung weiterer Funktionen auf dem Multchip-Carrier angeordnete werden:
- eine Standby-Versorgung, die falls notwendig den Aufbau einer komplexen Spannungsversorgung im Steuergerät vermeidet,
- einen CAN-Treiber, um eine Kommunikation, Daten- Ein- und Ausgabe, sowie Applikationsprotokolle über einen CAN-Bus zu ermöglichen,
- alternativ oder parallel kann auch vorteilhaft eine USB-Ankopplung vorgesehen sein,
- ferner können in vorteilhafter Weise weitere Funktionen über Calibration RAM, AD-Wandler und weiteren Bauelementen zur Verfügung gestellt werden.

Weiterhin stellt die erfindungsgemäße Vorrichtung vorteilhaft wenigstens eine der folgenden Funktionalitäten bereit:
- Debugging, um beispielsweise Emulationen schrittweise durchführen zu können und/oder den Programm-Code optimieren zu können,
- Eine Wake-up-Funktion, um spezielle Applikationsforderungen wie Kaltstart zu unterstützen,
- CAN (Controller Area-Network) sowie USB (Universial Serial Bus), um genormte Kommunikationsprotokolle zur Verfügung zu stellen.

In vorteilhafter Weise sind auf dem Multichip-Carrier CAN und/oder USB-Stecker angeordnet. Dies ermöglicht einen Datenaustausch mit dem Multichip-Carrier auch in Steuergeräten, die serienmässig nicht mit einer CAN oder USB-Funktionalität ausgerüstet sind.

Sind CAN oder USB-Schnittstellen am Steuergerät vorhanden, so können auch diese für den Datenaustausch mit dem Multichip-Carrier genutzt werden.

### Zeichnungen

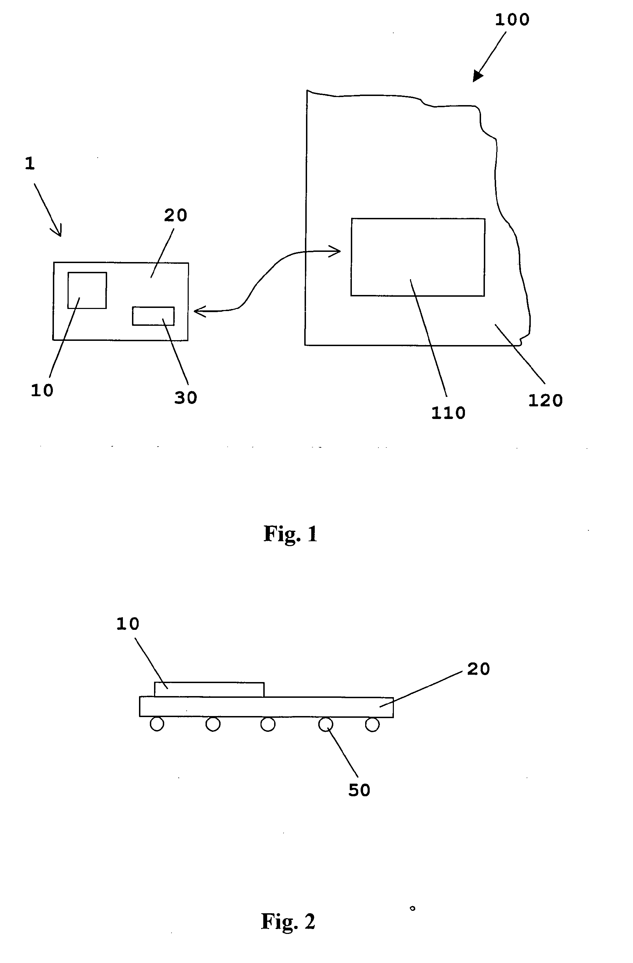

Ausführungsbeispiele der Erfindung sind in den Zeichnungen dargestellt und in der nachfolgenden Beschreibung näher erläutert.
Es zeigen Figur 1 eine zum Einbau vorgesehene erfindungsgemäße Vorrichtung 1,
Figur 2 eine erfindungsgemäße Vorrichtung 1 im Querschnitt.

### Beschreibung der Ausführungsbeispiele

Fig. 1 zeigt einen Ausschnitt eines Steuergerätes 100 und eine noch nicht eingebaute erfindungsgemäße Vorrichtung 1. Im dargestellten Ausschnitt des Steuergerätes 100 ist auf einen Schaltungsträger 120 ein Mikroprozessor 110 angeordnet, der durch die erfindungsgemäße Vorrichtung 1 ersetzt werden kann. Die Vorrichtung 1 umfasst einen rechteckigen Multichip-Carrier 20. auf dem in einem Eckbereich ein quadratischer Flip Chip-Prozessor 10 angeordnet ist, wobei der Multichip-Carrier 20 in seinen äußeren Abmessungen dem zu tauschenden Mikroprozessor 110 entspricht. Zusätzlich zum Flip-Chip-Prozessor 10 ist mindestens ein weiteres Bauelement 30 auf dem Multichip-Carrier 20 angeordnet. Der Doppelpfeil deutet den Austausch des Mikro-Prozessor 110 gegen den Multichip-Carrier 20 an. Vor dem Einbau der Vorrichtung 1 ist der Mikroprozessor 110 zu entfernen. Beispielsweise sind hierzu bei einem eingelöteten Mikroprozessoren 110 die Lötstellen des Mikroprozessor 110 soweit zu erwärmen, dass nach dem Aufschmelzen des Lotes der Mikroprozessor 110 entfernt werden kann. Die Kontaktstellen der erfindungsgemäßen Vorrichtung 1 sind so angeordnet, dass die auf dem Schaltungsträger 120 des Steuergerätes 100 angeordneten Kontakt-Pads für den Mikroprozessor 110 genutzt werden können. Die Verbindung des Multichip-Carriers 20 mit den Kontakt-Pads des Steuergerätes 100 erfolgt beispielsweise durch Reflow-Löten. Für Steuergeräte 100 in denen der Mikroprozessor 110 in einem Stecksockel eingesteckt ist, kann der Multichip-Carrier alternativ auch mit Kontakt-Pins versehen sein.

Die erfindungsgemäße Vorrichtung übernimmt die Funktion des getauschten Mikroprozessor 110 und stellt weitere Funktionen zur Emulation bereit. Von besonderem Vorteil ist, dass der Funktionsumfang des getauschten Mikroprozessors 110 ganz oder teilweise von dem auf dem Multichip-Carrier 20 angeordneten, wesentlich kleiner aufbauenden Flip Chip-Prozessor 10 übernommen wird. Aufgrund des geringen Aufbaumaßes ergibt sich die Möglichkeit auf den Multichip-Carrier 20 weitere Bauelemente 30 anzuordnen, die zusätzliche Funktionen bereitstellen. Insbesondere ist es möglich die Stromversorgung des Flip Chips 10 autark über eine Standby-Versorgung und weiteren passiven Bauelementen beispielsweise Elektrolytkondensatoren bereitzustellen. Dies hat den Vorteil, dass eine aufwendige und komplexe Stromversorgung für die Vorrichtung 1 nicht im Steuergerät 100 bereitgestellt werden muss. Weiterhin können CAN und/oder USB-Stecker direkt auf dem Multichip-Carrier angeordnet sein, so dass mit Hilfe von Datenmanipulationseinrichtungen direkt auf die Vorrichtung 1 zugegriffen werden kann. Durch die Anordnung weiterer Bauelemente kann die Funktionalität und Leistungsfähigkeit der Vorrichtung beispielsweise durch Debugging, Wake-up, und Calibration-Funktionen weiter erhöht werden. Der besondere Vorteil der Vorrichtung liegt darin, dass die Funktionalität auch in Steuergeräten zu implementieren ist, deren Layouts typischerweise nicht die Aufnahme vom Emulationstastköpfen, -vorrichtungen oder -schaltungsträger erlaubt. So ist es möglich auch Seriensteuergeräten in vorteilhafter Weise Emulationsprozessen auszusetzen. Die Emulationsprozesse können hier von vielfältiger Natur sein, so ist es zum einen möglich den Datenbereich zu manipulieren sowie auch unterschiedliche Programme bzw. Algorithmen zum Einsatz zu bringen. Des Weiteren ist es möglich auch Fahr- und Motorzustände sowie Sensorsignale zu emulieren oder zu manipulieren, beispielsweise durch Bereitstellen von Daten anstelle der vom Fahrzeug eingelesenen oder durch Verändern der vom Fahrzeug gemessenen Werte.

Figur 2 zeigt einen Querschnitt durch eine erfindungsgemäße Vorrichtung 1. Auf einer ersten Seite des Multi-Chip-Carriers 20 ist der Flip-Chip-Prozessor angeordnet, auf einer zweiten Seite, sind Lötbumps 50 angeordnet. Die Lötbumps 50 sind so angeordnet, dass die ursprünglich dem Mikroprozessor zugeordneten Kontaktpads auf der Leiterplatte 120 des Steuergeräts 100 zur elektrischen Kontaktierung genutzt werden können. Alternativ zu den Lötbumps können auch Lötpreforms eingesetzt werden oder ein Vorbeloten der Kontaktpads erfolgen.

Erfindungsgemäß erfolgt die Bereitstellung der Prozessorfunktionen über einen Flip-Chip-Prozessor. Alternativ hierzu können jedoch auch ungehäuste Prozessoren eingesetzt werden, deren elektrischer Kontakt über Kontaktpads und Drahtbonds mit dem Multichip-Carrier hergestellt wird.

## Patentansprüche

1. Vorrichtung (1) zur Bereitstellung von Emulationsfunktionen in einem Steuergerät (100),
- mit einem auf einem Multichip-Carrier (20) angeordneten Flip-Chip-Prozessor (10),
- wobei der Multichip-Carrier (20) ein im Steuergerät (100) vorhandenen Mikroprozessor (110) ersetzt,
- wobei der Flip-Chip-Prozessor (10) zumindest teilweise die Leistung und den Funktionsumfang des ersetzten Mikroprozessors (110) bereitstellt,
- wobei der Flip-Chip-Prozessor (110) zusätzlich Funktionen zur Emulation bereitstellt,
- wobei auf dem Multichip-Carrier (20) zusätzlich zum Flip-Chip-Prozessor (10) mindestens ein weiteres Bauelement (30) angeordnet ist,
- wobei das mindestens eine Bauelement (30) weitere zusätzliche Funktionen bereitstellt.

2. Vorrichtung (1) nach einem der vorhergehenden Ansprüche, **dadurch gekennzeichnet, dass** auf dem Multichip-Carrier (20) zusätzlich zum Flip-Chip-Prozessor (10) mindestens eines der folgenden Bauelemente (30) angeordnet ist: eine Standby Versorgung, ein CAN-Treiber, ein USB-Oszillator, Calibration RAM, AD-Wandler, Widerstand, Diode, Kondensator.

3. Vorrichtung (1) nach einem der vorhergehenden Ansprüche, **dadurch gekennzeichnet, dass** wenigstens eine der folgenden Funktionalitäten bereitgestellt ist: Debugging, Wake-up, CAN, USB, Calibration.

4. Vorrichtung (1) nach einem der vorhergehenden Ansprüche, **dadurch gekennzeichnet, dass** CAN und/oder USB-Stecker auf dem Multichip-Carrier angeordnet sind.

5. Vorrichtung (1) nach einem der vorhergehenden Ansprüche, **dadurch gekennzeichnet, dass** CAN und/oder USB-Schnittstellen des Steuergerätes (100) für die Daten-Ein- und Ausgabe zum Multichip-Carrier (20) genutzt werden.
